# EUROPÄISCHE PATENTSCHRIFT

(11) **EP 2 230 394 B1**
(45) Veröffentlichungstag und Bekanntmachung des Hinweises auf die Patenterteilung: **15.07.2015**
(21) Anmeldenummer: 10154480.7
(22) Anmeldetag: 24.02.2010
(51) Int. Cl.: F02K 9/90, F42B 10/66

(54) **Bauteil zum Einsatz in Heißgasströmungen**
Component for use in hot gas flows
Composant utilisable dans des écoulements de gaz chaud

(30) Priorität: 06.03.2009 DE 102009013150
(43) Veröffentlichungstag der Anmeldung: 22.09.2010
(73) Patentinhaber: Deutsches Zentrum für Luft- und Raumfahrt e.V., 51147 Köln (DE)
(72) Erfinder: Friess, Dr. Martin, 72636, Frickenhausen-Linsenhofen (DE); Keck, Markus, 70374, Stuttgart (DE)
(74) Vertreter: Hoeger, Stellrecht & Partner Patentanwälte

(56) Entgegenhaltungen:
- EP-A2- 0 744 591
- WO-A1-02/073118
- WO-A2-2006/010502
- DE-A1- 19 632 893

## Beschreibung

Die Erfindung betrifft ein Bauteil zum Einsatz in Heißgasströmungen.

Heißgasströmungen ausgesetzt sind beispielsweise Bauteile der Triebwerke von Flugobjekten wie etwa Strahlruder. Strahlruder werden auch als Strahlklappen oder Steuerruder bezeichnet. Sie werden in der Nähe eines Austrittsendes einer Düse eines Flugobjekts angeordnet und dienen dazu, die Heißgasströmung unmittelbar vor dem Austritt zu beeinflussen, um damit das Flugobjekt lenken zu können.

Heißgasströmungen enthalten insbesondere bei einem Einsatz fester Brennstoffe häufig Partikel. Ein mit einer Heißgasströmung beaufschlagtes Bauteil wie beispielsweise ein Strahlruder wird daher regelmäßig sowohl aerodynamisch als auch durch ein Auftreffen abrasiver und/oder korrosiver Partikel belastet.

Aus der WO 2006/010502 A2 ist ein Strahlruder zum Einsatz in Heißgasströmungen mit einem Flügel bekannt, wobei der Flügel aus einem faserverstärkten keramischen Werkstoff hergestellt ist, der faserverstärkte keramische Werkstoff mittels durchgehenden Gewebelagen hergestellt ist und der Werkstoff für einen Kernbereich des Flügels einen höheren Keramikgehalt aufweist als ein Deckbereich zu beiden Seiten des Kernbereichs.

Aus der DE 196 32 893 A1 ist ein Flugkörper mit einer Bugspitze, festen Flossen oder beweglichen Rudern, Strahlrudern, Schubdüsen und Düsenhalseinsätzen, Brennkammerauskleidungen, Heckkonus, Gitterflügeln, Fluidikelementen und einem Radom bekannt, wobei diese Bauelemente aus keramischem Material bestehen.

Aus der US 2007/0119151 A1 ist eine Düsenanordnung bekannt, welche Strahlruder umfasst, die schwenkbar um eine Achse angeordnet sind.

Aus der WO 2005/028844 A1 ist ein Raketenmotor bekannt, welcher Strahlruder in einer Motordüse umfasst.

Der Erfindung liegt die Aufgabe zugrunde, ein Bauteil zum Einsatz in Heißgasströmungen bereitzustellen, welches eine hohe Beständigkeit sowohl gegenüber aerodynamischen als auch gegenüber abrasiven Belastungen aufweist.

Diese Aufgabe wird bei einem Bauteil zum Einsatz in Heißgasströmungen der eingangs beschriebenen Art erfindungsgemäß dadurch gelöst, dass das Bauteil einen ersten Bereich an faserkeramischem Material, einen zweiten Bereich an faserkeramischem Material und eine zwischen dem ersten Bereich und dem zweiten Bereich angeordnete mittlere Lage an faserkeramischem Material umfasst, wobei das faserkeramische Material der mittleren Lage einen niedrigeren Keramikgehalt aufweist als das faserkeramische Material des ersten Bereichs und des zweiten Bereichs, und dass mindestens eine spitzwinklige Anströmkante und/oder Abströmkante des Bauteils an der mittleren Lage ausgebildet ist.

Der Keramikgehalt beeinflusst die für eine Verwendung in Heißgasströmungen relevanten Eigenschaften eines faserkeramischen Materials. Eine Erhöhung des Keramikgehalts geht einerseits mit einer Erhöhung der Abrasions- und Korrosionsbeständigkeit, andererseits mit einer Verringerung der mechanischen Festigkeit, insbesondere der Druck- und Zugfestigkeit, einher. Eine hohe mechanische Festigkeit ist aber eine Voraussetzung für eine hohe Stabilität gegenüber aerodynamischen Belastungen.

Die mittlere Lage des erfindungsgemäßen Bauteils kann aufgrund ihrer relativ hohen mechanischen Festigkeit vorteilhaft als aerodynamisch tragende Lage des Bauteils dienen. Vor Schädigungen durch Abrasion und Korrosion ist das Bauteil demgegenüber durch die Wahl des Materials des ersten und des zweiten Bereichs, zwischen denen die mittlere Lage angeordnet ist, geschützt.

Anströmkanten und Abströmkanten sind Kanten, über die jeweils zwei Strömungsführungsflächen des Bauteils, an denen entlang bei der Verwendung des Bauteils eine Heißgasströmung geführt wird, miteinander verbunden sind. Zwei Strömungsführungsflächen können unter Einschluss eines Winkels direkt aufeinander treffen, so dass die Kante eine endliche Längserstreckung, aber keine endliche Quererstreckung quer zu der Längserstreckung aufweist. Der Winkel, in dem die Strömungsführungsflächen aufeinander treffen, definiert in diesem Fall den Kantenwinkel.

Zwei Strömungsführungsflächen können aber auch über einen gesonderten Oberflächenabschnitt des Bauteils miteinander verbunden sein. Dann wird die Kante durch diesen Oberflächenabschnitt gebildet und weist sowohl eine endliche Längserstreckung als auch eine endliche Quererstreckung quer zu der Längserstreckung auf. Als Kantenwinkel wird hier der Winkel bezeichnet, der in einer Ebene senkrecht zur Längserstreckung der Kante zwischen den Tangentialebenen der Strömungsführungsflächen an den Punkten, an denen sie jeweils an die Kante angrenzen, gegeben ist. Eine endliche Quererstreckung weisen insbesondere auch abgerundete Kanten auf.

Bei der bestimmungsgemäßen Verwendung des Bauteils ist dieses so ausgerichtet, dass eine Anströmkante in eine Richtung weist, welche einer Strömungsrichtung der Heißgasströmung im Wesentlichen entgegengesetzt ist, während eine Abströmkante in eine zur Strömungsrichtung der Heißgasströmung im Wesentlichen parallele Richtung weist.

Erfindungsgemäß ist mindestens eine spitzwinklige Anströmkante und/oder Abströmkante des Bauteils, d. h. mindestens eine Anströmkante und/oder Abströmkante mit einem spitzen Kantenwinkel, an der mittleren Lage ausgebildet.

Durch diese Ausgestaltung wird die Stabilität des Bauteils an der mindestens einen Anströmkante und/oder Abströmkante erhöht. Insbesondere wird die Wahrscheinlichkeit des Ausbrechens an dieser mindestens einen Kante verringert, wie es in Heißgasströmungen häufig beobachtet wird und zu einer weitgehenden Funktionsunfähigkeit des Bauteils führen kann.

Ein Ausbrechen an einer spitzwinkligen Anströmkante oder Abströmkante tritt seltener auf, wenn das Material des Bereichs, an dem diese Kante ausgebildet ist, gezielt hinsichtlich seiner mechanischen Festigkeit optimiert ist, wie dies bei der mittleren Lage der Fall ist. Insbesondere ist zur möglichst weitgehenden Vermeidung des Ausbrechens eine hohe mechanische Festigkeit des Bereichs der Kante von relativ größerer Bedeutung als eine hohe Abrasionsbeständigkeit.

Besonders günstig wirkt sich die Ausbildung einer Kante an der mittleren Lage im Falle einer Abströmkante aus, da diese im Vergleich zu einer Anströmkante geringeren abrasiven Belastungen ausgesetzt ist und sich somit die relativ geringe Abrasionsbeständigkeit der mittleren Lage hier in noch geringerem Ausmaß nachteilig auswirkt.

Günstig ist es, wenn die mindestens eine Anströmkante und/oder Abströmkante zumindest über einen Teil einer endlichen Längserstreckung an der mittleren Lage ausgebildet ist.

Besonders günstig ist es, wenn die mindestens eine Anströmkante und/oder Abströmkante über ihre gesamte Längserstreckung an der mittleren Lage ausgebildet ist.

Bevorzugt weist die mindestens eine Anströmkante und/oder Abströmkante eine endliche Quererstreckung quer zu ihrer Längserstreckung auf. Insbesondere kann die mindestens eine Anströmkante und/oder Abströmkante abgerundet ausgebildet sein. Kanten mit einer endlichen Quererstreckung weisen im Vergleich zu Kanten ohne endliche Quererstreckung eine erhöhte Stabilität gegenüber den abrasiven und korrosiven Belastungen in einer Heißgasströmung auf.

Wenn die mindestens eine Anströmkante und/oder Abströmkante eine endliche Querstreckung aufweist, ist es günstig, wenn sie zumindest über einen Teil ihrer Quererstreckung an der mittleren Lage ausgebildet ist.

Besonders günstig ist es, wenn die mindestens eine Anströmkante und/oder Abströmkante über ihre gesamte Quererstreckung an der mittleren Lage ausgebildet ist.

Insbesondere ist vorgesehen, dass sowohl die mindestens eine Anströmkante und/oder Abströmkante über ihre gesamte Quererstreckung als auch mindestens ein an die mindestens eine Anströmkante und/oder Abströmkante angrenzender kantennaher Abschnitt einer Strömungsführungsfläche des Bauteils an der mittleren Lage ausgebildet sind. In diesem Fall wird eine besonders weitgehende Verringerung der Wahrscheinlichkeit eines Ausbrechens an der mindestens einen Anströmkante und/oder Abströmkante erzielt.

Günstig ist es, wenn eine Verlaufsrichtung der mittleren Lage zu der Längserstreckung der mindestens einen Anströmkante und/oder Abströmkante parallel ist. Dann kann gezielt die mindestens eine Anströmkante und/oder Abströmkante, insbesondere über ihre gesamte Längserstreckung, an der mittleren Lage ausgebildet sein, während die Strömungsführungsflächen zum größten Teil an anderen Bereichen faserkeramischen Materials, beispielsweise an dem ersten oder zweiten Bereich, ausgebildet sein und somit hinsichtlich ihrer Abrasionsbeständigkeit optimiert sein können.

Vorteilhafterweise liegt eine Winkelhalbierende eines Kantenwinkels mindestens einer Anströmkante und/oder Abströmkante innerhalb des Bauteils in der mittleren Lage. In einer derartigen Struktur kann die mittlere Lage als aerodynamisch tragende Lage einen besonders hohen Beitrag zur Erhöhung der Stabilität des Bauteils leisten. Insbesondere ermöglicht es eine derartige Struktur, zwei einander gegenüberliegende Anströmkanten und/oder Abströmkanten des Bauteils beide an der mittleren Lage auszubilden.

Ein einfacher Aufbau des Bauteils ergibt sich, wenn eine Winkelhalbierende eines Kantenwinkels mindestens einer Anströmkante und/oder Abströmkante in einer parallel zu der Längserstreckung dieser mindestens einen Anströmkante und/oder Abströmkante verlaufenden Mittelebene des Bauteils verläuft.

Bevorzugt ist ein Aufbau des Bauteils aus Bereichen faserkeramischen Materials spiegelsymmetrisch bezüglich der Mittelebene. Als Bereiche faserkeramischen Materials gelten insbesondere auch Lagen faserkeramischen Materials wie die mittlere Lage. Die Spiegelsymmetrie ist bei makroskopischer Betrachtung festzustellen, d.h. bezüglich der Form, der gegenseitigen Anordnung und des Materialtyps der Bereiche, aber nicht bezüglich ihrer Feinstruktur und ihrer genauen stofflichen Zusammensetzung.

Bei einer bevorzugten Ausführungsform des erfindungsgemäßen Bauteils sind der erste Bereich und/oder der zweite Bereich als Lagen faserkeramischen Materials ausgebildet. Das Bauteil weist dann einen Lagenaufbau auf; dieser kann neben der mittleren Lage und den Lagen des ersten und des zweiten Bereiches weitere Lagen umfassen.

Vorteilhaft ist es, wenn das Bauteil mindestens eine Zwischenlage an faserkeramischem Material aufweist, an welche auf einer ersten und einer zweiten Seite jeweils direkt eine Lage an faserkeramischen Material angrenzt, wobei ein Keramikgehalt des faserkeramischen Materials der Zwischenlage zwischen einem Keramikgehalt der auf der ersten Seite angrenzenden Lage und einem Keramikgehalt der auf der zweiten Seite angrenzenden Lage liegt. Durch eine derartige Gradierung wird eine starke Verbindung zwischen den Lagen erhalten, was zu einer hohen Stabilität des Bauteils beiträgt.

Günstig ist es, wenn das Bauteil einen Lagenaufbau aus Lagen an faserkeramischem Material aufweist, in welchem in einer Stapelrichtung der Lagen alternierend Lagen jeweils eines faserkeramischen Materials mit einem relativ hohen Keramikgehalt und Lagen jeweils eines faserkeramischen Materials mit einem relativ niedrigen Keramikgehalt angeordnet sind. Relativ hohe Keramikgehalte der Materialien einer ersten Anzahl von Lagen und relativ niedrige Keramikgehalte der Materialien einer zweiten Anzahl von Lagen sind dann gegeben, wenn das Material jeder Lage der ersten Anzahl einen höheren Keramikgehalt aufweist als das Material jeder Lage der zweiten Anzahl. Durch diese Maßnahme wird die Beständigkeit des Bauteils erhöht. Im Allgemeinen gilt, dass eine Erhöhung der Anzahl der über einer gegebenen Erstreckung des Bauteils in der Stapelrichtung alternierend angeordneten Lagen, deren faserkeramische Materialien einen relativ hohen bzw. relativ kleinen Keramikgehalt aufweisen, zu einer Verbesserung der Stabilität des Bauteils führt. Zwischen einer Lage eines faserkeramischen Materials mit einem relativ hohen Keramikgehalt und einer ihr benachbarten Lage eines faserkeramischen Materials mit einem relativ niedrigen Keramikgehalt können dabei auch eine oder mehrere der oben beschriebenen Zwischenlagen vorgesehen sein.

Vorteilhaft ist es, wenn das Bauteil eine Decklage an faserkeramischem Material aufweist, wobei das faserkeramische Material der Decklage einen höheren Keramikgehalt aufweist als das faserkeramische Material der mittleren Lage. Auf eine Decklage, an der eine ausgedehnte Oberfläche des Bauteils ausgebildet ist, trifft in einer Heißgasströmung eine große Anzahl an korrosiven und abrasiven Partikeln auf, weswegen es günstig ist, wenn ihr faserkeramisches Material einen hohen Keramikgehalt und damit eine hohe Abrasionsbeständigkeit aufweist.

Der Aufbau des Bauteils aus verschiedenen Bereichen, d.h. insbesondere auch Lagen, und deren jeweiliges faserkeramisches Material werden in Abhängigkeit von den Temperaturanforderungen und den Belastungen durch die Heißgasströmung in dem jeweils vorgesehenen Einsatzgebiet festgelegt.

Bevorzugt ist oder umfasst das faserkeramische Material mindestens eines Bereichs ein Carbidkeramikmaterial.

Bevorzugt ist es weiterhin, wenn das faserkeramische Material mindestens eines Bereichs C-Fasern (Kohlenstofffasern) oder SiC-Fasern (Siliciumcarbidfasern) enthält.

Insbesondere ist oder umfasst das faserkeramische Material des mindestens einen Bereichs ein C/C-SiC-Material oder ein SiC/SiC-Material.

Als C/C-SiC-Material wird ein faserkeramisches Material mit Kohlenstofffasern in einer Matrix aus Kohlenstoff und Siliciumcarbid bezeichnet. Zu seiner Herstellung werden zunächst Kohlenstofffasern in eine Matrix aus einem kohlenstoffhaltigen Matrixpolymer eingebettet. Durch eine Pyrolyse des Matrixpolymers wird anschließend eine Kohlenstoffmatrix erzeugt. Bei einem darauf folgenden Zusatz von flüssigem Silicium bildet dieses mit einem Teil des Kohlenstoffs der Kohlenstoffmatrix Siliciumcarbid, sodass unter Keramisierung eine Kohlenstoff und Siliciumcarbid enthaltende Matrix entsteht. Dieses Verfahren wird auch als "Liquid Silicon Infiltration"-Verfahren (LSI-Verfahren) bezeichnet.

Durch eine thermische Vorbehandlung der Kohlenstofffasern ist bei einem LSI-Verfahren die Stärke ihrer Bindung an das kohlenstoffhaltige Matrixpolymer beeinflussbar. Je schwächer diese Bindung ist, in desto größerem Ausmaß ist nach der Pyrolyse die Kohlenstoffmatrix von den Fasern abgelöst. Wenn eine derartige Ablösung in hohem Ausmaß stattgefunden hat, sind bei der Keramisierung große Bereiche des pyrolysierten Körpers dem flüssigen Silicium zugänglich, sodass ein hoher Siliciumcarbidgehalt und damit auch ein hoher Keramikgehalt erzielt wird. Daher ist durch eine thermische Vorbehandlung der Kohlenstofffasern der Keramikgehalt des C/C-SiC-Materials einstellbar.

Ein SiC/SiC-Material besteht aus Siliciumcarbidfasern in einer Siliciumcarbid-matrix. Es kann durch die Abscheidung einer Siliciumcarbid-Matrix aus einer gasförmigen Vorläuferkomponente an Siliciumcarbidfasern in einem so genannten "Chemical Vapor Infiltration"-Verfahren (CVI-Verfahren) hergestellt werden.

Vorteilhafterweise besteht die mittlere Lage aus einem C/C-SiC-XB-Material. Dieser Materialtyp weist einen niedrigen Keramikgehalt und damit eine hohe mechanische Festigkeit auf.

Weiterhin bestehen der erste Bereich und/oder der zweite Bereich vorteilhafterweise aus einem C/C-SiC-XD-Material. Dieser Materialtyp weist einen hohen Keramikgehalt und eine hohe Abrasionsbeständigkeit auf.

Bezüglich ihres Keramikgehalts zwischen einem C/C-SiC-XB-Material und einem C/C-SiC-XD-Material liegen C/C-SiC-XT-Materialien und C/C-SiC-XC-Materialien. Diese können beispielsweise für Zwischenlagen zwischen jeweils einer Lage aus einem C/C-SiC-XB-Material und einer Lage aus einem C/C-SiC-XD-Material verwendet werden.

Es kann auch vorgesehen sein, dass das faserkeramische Material mindestens eines Bereichs zumindest teilweise aus einem biomorphen Werkstoff hergestellt ist. Beispielsweise kann aus einer Mischung eines cellulosehaltigen Pulvers und eines Bindemittels durch Aushärten des Bindemittels ein Vorstufenmaterial hergestellt werden, das anschließend durch Pyrolyse und Keramisierung zu einem SiC-Material umgesetzt werden kann.

Vorteilhaft ist es, wenn das faserkeramische Material mindestens eines Bereichs Fasern enthält, welche in Form eines Filzes, eines Vlieses, eines Wickels, eine Geleges, eines Gewebes oder eines Geflechts angeordnet sind. Bei der Herstellung des Bauteils kann dann ein Faserhalbzeug eingesetzt werden, in dem die Fasern in der jeweiligen Struktur angeordnet sind.

Vorzugsweise ist das Bauteil als Strahlruder ausgebildet. Es kann sich bei dem Bauteil aber auch um ein anderes mit mindestens einer Anströmkante und/oder Abströmkante versehenes Bauelement zum Einsatz in einer Heißgasströmung handeln, welches beispielsweise zur Verwendung in einem Raketentriebwerk oder auch in einem Kraftwerk, insbesondere in dessen Kesselbereich, bestimmt sein kann.

Die Herstellung des erfindungsgemäßen Bauteils kann beispielsweise mittels eines Autoklavverfahrens, eines Presstechnikverfahrens oder eines "Resin Transfer Molding"-Verfahrens (RTM-Verfahrens) erfolgen. Durch die genannten Verfahren kann jeweils ein Vorkörper mit in ein Matrixpolymer eingebetteten Fasern erhalten werden. Der Vorkörper kann einen definierten Aufbau aus verschiedenen Bereichen, insbesondere einen Lagenaufbau, aufweisen, wobei für die verschiedenen Bereiche unterschiedliche Materialien verwendet werden können. Anschließend kann der Vorkörper zur Herstellung des faserkeramischen Materials des Bauteils als Ganzes den Schritten der Pyrolyse und der Keramisierung eines LSI-Verfahrens unterzogen werden. Nach der Keramisierung kann durch eine Nachbearbeitung wie Schleifen oder Fräsen die gewünschte Form des Bauteils erhalten werden.

In einem Autoklavverfahren werden mit einer flüssigen Matrixkomponente getränkte Faserhalbzeuge in der gewünschten Struktur in einem Autoklaven angeordnet, in dem anschließend die Matrixkomponente zum Matrixpolymer ausgehärtet wird.

Auch bei einem Presstechnikverfahren geht man von in der gewünschten Struktur angeordneten, mit einer flüssigen Matrixkomponente getränkten Faserhalbzeugen aus. Die Aushärtung der Matrixkomponente zum Matrixpolymer wird in diesem Fall allerdings in einer Pressform vorgenommen. Ein Presstechnikverfahren zur Herstellung eines Strahlruders ist beispielsweise in der WO 2006/010502 A2 beschrieben.

Bei einem RTM-Verfahren werden die Faserhalbzeuge in der gewünschten Struktur in eine Infiltrationsform eingebracht. Die Infiltrationsform wird verschlossen, bevor eine flüssige Matrixkomponente in sie eingespeist wird. Die Matrixkomponente durchtränkt dann die Faserhalbzeuge und wird in der Infiltrationsform ausgehärtet.

Beim Aushärten wird bei den beschriebenen Verfahren jeweils eine feste Verbindung zwischen den verschiedenen Bereichen des Vorkörpers erhalten.

Insbesondere können bei den beschriebenen Verfahren für die verschiedenen Bereiche des Vorkörpers Faserhalbzeuge aus Kohlenstofffasern verwendet werden, die sich in der thermischen Vorbehandlung der Fasern unterscheiden. Dies führt zu Unterschieden in der Stärke der Bindung der Fasern an das Matrixpolymer, weswegen nach der Durchführung der Pyrolyse und der Keramisierung an dem Vorkörper Bereiche mit unterschiedlichen Keramikgehalten erhalten werden.

Die Anzahl und Form der Bereiche an faserkeramischem Material des erfindungsgemäßen Bauteils und insbesondere auch die Dicke von Lagen an faserkeramischem Material können somit durch eine entsprechende Auswahl der Faserhalbzeuge, die bei der Herstellung des Vorkörpers verwendet werden, bestimmt werden.

Die nachfolgende Beschreibung bevorzugter Ausführungsformen dient im Zusammenhang mit der Zeichnung der näheren Erläuterung der Erfindung. Es zeigen:
- Figur 1: eine schematische Darstellung eines Ausführungsbeispiels eines mit Strahlrudern versehenen Triebwerks für ein Flugobjekt;
- Figur 2: eine perspektivische Darstellung eines Ausführungsbeispiels eines Strahlruders;
- Figur 3: eine Querschnittsansicht eines ersten Ausführungsbeispiels eines erfindungsgemäßen Strahlruders, welches eine Form gemäß Figur 2 aufweist, längs der Linie A-A in Figur 2;
- Figur 4: eine vergrößerte Darstellung des die Anströmkante umfassenden Bereichs X der Querschnittsansicht gemäß Figur 3; und
- Figur 5: eine Querschnittsansicht eines zweiten Ausführungsbeispiels eines erfindungsgemäßen Strahlruders, welches eine Form gemäß Figur 2 aufweist, längs der Linie A-A in Figur 2.

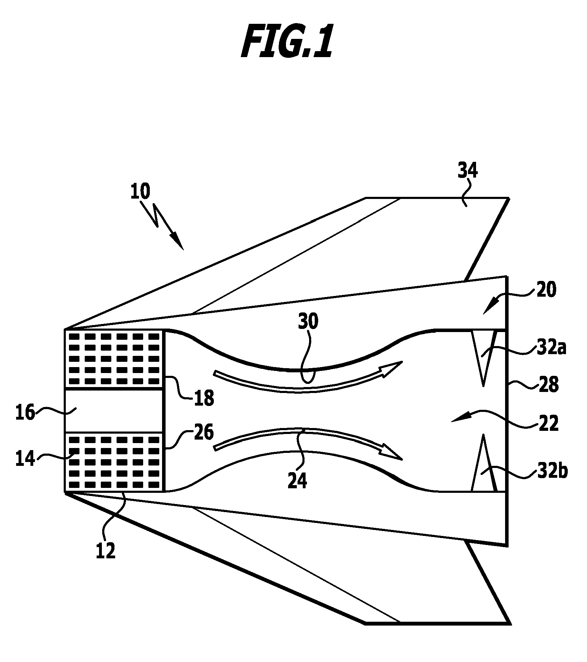

Figur 1 zeigt ein dort mit 10 bezeichnetes Ausführungsbeispiel eines Triebwerks für ein Flugobjekt. Bei dem Triebwerk 10 ist in einem Gehäuse 12 ein Treibsatz 14 mit einem Festbrennstoff angeordnet. Der Treibsatz 14 kann mit einem zentralen Kanal 16 versehen sein.

An ein üblicherweise rückwärtiges Ende 18 des Gehäuses 12 schließt sich ein Heckkonus 20 an, in welchem eine Düse 22 angeordnet ist. Im Betrieb ist diese Düse 22 von einer Heißgasströmung 24 durchsetzt, die sich beim Abbrennen des Treibsatzes 14 ausbildet. Die Heißgasströmung 24 tritt im Bereich des Endes 18 aus dem Gehäuse 12 aus. Dabei tritt die Heißgasströmung 24 in ein treibsatzseitiges Ende 26 der Düse 22 ein und aus einem Austrittsende 28 der Düse 22 in die Umgebung aus, wobei die Düse 22 zwischen dem treibsatzseitigen Ende 26 und dem Austrittsende 28 eine Verengung 30 aufweist.

Nahe des Austrittsendes 28 der Düse 22 sind Strahlruder 32a, 32b vorgesehen. Sie dienen dazu, die Heißgasströmung 24 unmittelbar vor dem Austritt durch das Austrittsende 28 zu beeinflussen, um damit das mit dem Triebwerk 10 versehene Flugobjekt zu lenken.

Die Heißgasströmung 24 kann Partikel mit sich führen. Die Strahlruder 32a, 32b sind in der Heißgasströmung 24 daher üblicherweise sowohl aerodynamischen Belastungen als auch abrasiven Belastungen ausgesetzt. Für die Lebensdauer der Strahlruder 32a, 32b ist insbesondere ihre Stabilität in den Bereichen entscheidend, an denen sie jeweils eine spitzwinklige Anströmkante bzw. Abströmkante aufweisen.

Der Heckkonus 20 umfasst beispielsweise noch zusätzliche äußere, flugstabilisierende Luftleitflächen 34, welche auch als Fins bezeichnet werden.

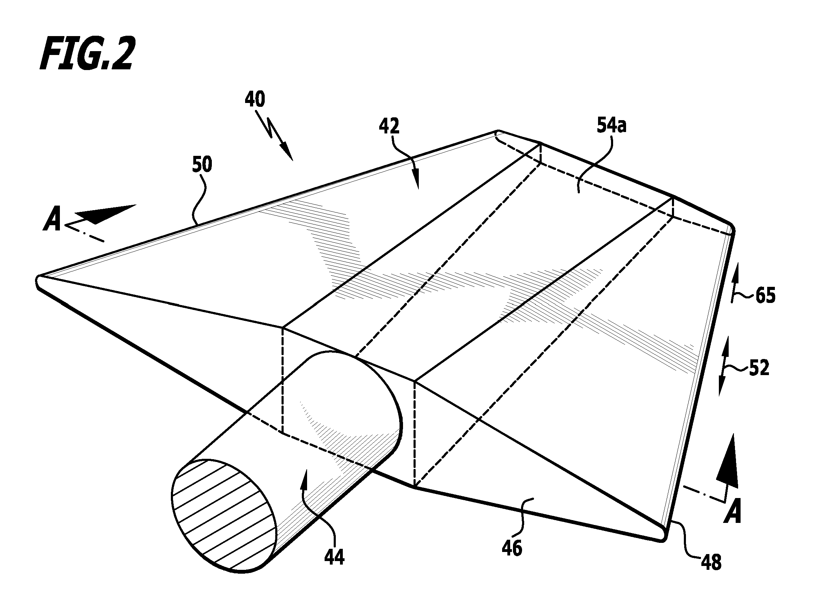

Ein Ausführungsbeispiel eines erfindungsgemäßen Strahlruders, welches in Figur 2 perspektivisch gezeigt und dort mit 40 bezeichnet ist, umfasst einen Flügel 42 und einem mit dem Flügel 42 verbundenen Schaft 44. Der Flügel 42 ist im Betrieb eines Flugobjekts der Heißgasströmung 24 ausgesetzt. Über den Schaft 44 ist das Strahlruder 40 in der Düse 22 drehbar gelagert. Der Schaft 44 dient somit als Befestigungsbolzen zur Fixierung des Flügels 42 an der Düse 22.

Der Flügel 42 des Strahlruders 40 weist die Geometrie eines angenäherten Pyramidenstumpfs auf. Eine Unterseite 46 des Flügels, welche einer Grundfläche des angenäherten Pyramidenstumpfs entspricht, ist näherungsweise in Form eines senkrecht zu einer seiner Seiten gestauchten Sechsecks ausgebildet.

Zwischen jeweils zwei in einem spitzen Winkel zueinander verlaufenden benachbarten Seitenflächen des angenäherten Pyramidenstumpfs des Flügels 42 sind an einander gegenüberliegenden Enden des Flügels 42 eine Anströmkante 48 und eine Abströmkante 50 ausgebildet. An der Anströmkante 48 beträgt der Winkel zwischen den an sie angrenzenden Seitenflächen beispielhaft ca. 30°, an der Abströmkante beispielhaft ca. 25°. Sowohl die Anströmkante als auch die Abströmkante sind abgerundet, so dass sie beide flächenförmig sind und sowohl eine endliche Längserstreckung als auch eine endliche Quererstreckung aufweisen. In Figur 2 ist die Längserstreckung 52 der Anströmkante 48 gezeigt.

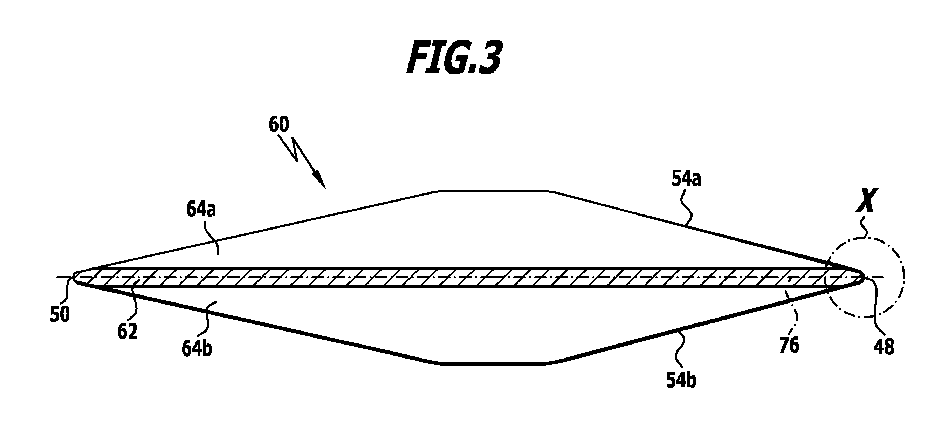

Zwei Strömungsführungsflächen des Flügels 42, die sowohl über die Anströmkante 48 als auch über die Abströmkante 50 miteinander verbunden sind und von denen eine Strömungsführungsfläche 54a in Figur 3 sichtbar ist, umfassen jeweils drei benachbarte Seitenflächen des angenäherten Pyramidenstumpfs des Flügels 42.

In der Heißgasströmung 24 wird die Orientierung des Strahlruders 40 so gewählt, dass die Anströmkante 48 in eine Richtung weist, welche einer Strömungsrichtung der Heißgasströmung 24 im Wesentlichen entgegengesetzt ist, während die Abströmkante 50 in eine zur Strömungsrichtung der Heißgasströmung 24 im Wesentlichen parallele Richtung weist.

Der Schaft 44 des Strahlruders 40 ist beispielsweise mittels eines zylindrischen Elements gebildet, wobei eine Grundfläche des Zylinders des Schafts 44 in zentrierter Position an der Unterseite 46 des Flügels 42 angeordnet ist.

In Figur 3 ist eine Querschnittsansicht eines ersten Ausführungsbeispiels eines erfindungsgemäßen Strahlruders 60, welches die in Figur 2 gezeigte Form aufweist, entlang der Linie A-A in Figur 2 wiedergegeben. Bereits in Figur 2 gezeigte Elemente sind in Figur 3 mit denselben Bezugszeichen bezeichnet wie in Figur 2.

In der Querschnittsansicht ist der Aufbau des Strahlruders 60 aus unterschiedlichen Bereichen an faserkeramischem Material erkennbar.

Eine mittlere Lage 62 an faserkeramischem Material ist zwischen einem ersten Bereich 64a an faserkeramischem Material und einem zweiten Bereich 64b an faserkeramischem Material angeordnet. Das faserkeramische Material der mittleren Lage 62 weist einen niedrigeren Keramikgehalt auf als das faserkeramische Material des ersten und des zweiten Bereichs 64a, 64b. Beispielsweise bestehen die mittlere Lage 62 aus einem C/C-SiC-XB-Material und der erste und der zweite Bereich 64a, 64b aus einem C/C-SiC-XD-Material.

Die mittlere Lage 62 verläuft eben und erstreckt sich quer durch das Strahlruder 60. Eine in Figur 2 gezeigte Verlaufsrichtung 65 der mittleren Lage 62 ist parallel zu der Längserstreckung 52 der Anströmkante 48; sowohl die Anströmkante 48 als auch die Abströmkante 50 sind an der mittleren Lage 62 ausgebildet.

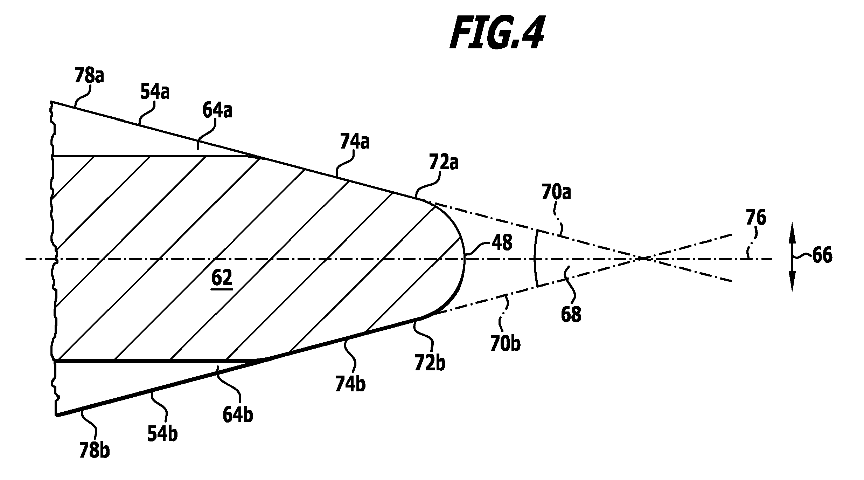

Die Ausgestaltung des Strahlruders 60 an der Anströmkante 48 wird im Folgenden anhand der in Figur 4 gezeigten vergrößerten Darstellung des Bereichs X der Querschnittsansicht gemäß Figur 3 näher erläutert. Diese Ausführungen gelten für den Bereich der Abströmkante 50 entsprechend, insofern im Folgenden nicht auf Unterschiede hingewiesen wird.

Wie bereits erwähnt, ist die Anströmkante 48 ein Abschnitt der Oberfläche des Strahlruders 60, über den die zwei Strömungsführungsflächen 54a, 54b miteinander verbunden sind. Sie weist neben der endlichen Längserstreckung 52 auch eine endliche Quererstreckung 66 auf. Ihr Kantenwinkel 68 ist der Winkel, der in der Ebene der Querschnittsansicht gemäß Figur 4, welche senkrecht zur Längserstreckung 52 der Anströmkante 48 verläuft, zwischen den Tangentialebenen 70a, 70b der Strömungsführungsflächen 54a, 54b an den Punkten 72a, 72b, an denen sie jeweils an die Anströmkante 48 angrenzen, gegeben ist. Da im vorliegenden Fall die an die Anströmkante 48 angrenzenden Bereiche der Strömungsführungsflächen 54a, 54b jeweils eben verlaufende Seitenflächen des angenäherten Pyramidenstumpfs des Flügels 42 sind, entspricht der Kantenwinkel 68 der Anströmkante 48 hier dem Winkel, unter dem diese Seitenflächen zueinander verlaufen. Er beträgt ca. 30°. Der entsprechend definierte Kantenwinkel der Abströmkante 50 beträgt ca. 25°.

Die Anströmkante 48 ist sowohl über ihre gesamte Längserstreckung 52 als auch über ihre gesamte Quererstreckung 66 an der mittleren Lage 62 ausgebildet. Darüber hinaus sind auch über die Anströmkante 48 miteinander verbundene kantennahe Abschnitte 74a, 74b der Strömungsführungsflächen 54a, 54b an der mittleren Lage 62 ausgebildet.

Der Kantenwinkel 68 der Anströmkante 48 weist eine Winkelhalbierende 76 auf, welche innerhalb des Strahlruders 60 in der mittleren Lage 62 liegt. Diese Winkelhalbierende 76 verläuft in einer parallel zu der Längserstreckung 52 der Anströmkante 48 verlaufenden Mittelebene des Strahlruders 60, bezüglich derer der Aufbau des Strahlruders 60 aus Bereichen faserkeramischen Materials spiegelsymmetrisch ist, so dass sich ein einfacher Aufbau ergibt. Die Winkelhalbierende 76 des Kantenwinkels 68 der Anströmkante 48 ist auch eine Winkelhalbierende des Kantenwinkels der Abströmkante 50.

Die die Anströmkante 48 und die Abströmkante 50 bildenden Oberflächenabschnitte des Strahlruders 60 und die kantennahen Abschnitte der Strömungsführungsflächen 54a, 54b an der Anströmkante 48 (wo die kantennahen Abschnitte mit den Bezugszeichen 74a, 74b bezeichnet sind) und an der Abströmkante 50 sind in dieser Struktur an einem Material mit relativ niedrigem Keramikgehalt ausgebildet, welches eine relativ hohe mechanische Festigkeit aufweist. Damit wird eine hohe Stabilität des Bauteils an der Anströmkante 48 und der Abströmkante 50 erzielt, insbesondere wird das Risiko eines Ausbrechens an diesen Kanten verringert.

Kantenferne Abschnitte 78a, 78b der Strömungsführungsflächen 54a, 54b sind demgegenüber an dem ersten Bereich 64a und dem zweiten Bereich 64b ausgebildet, deren Material jeweils einen relativ hohen Keramikgehalt aufweist. Daher weist das Bauteil in diesen Oberflächenabschnitten, die den größten Teil der Strömungsführungsflächen 54a, 54b einnehmen, eine hohe Abrasions- und Korrosionsbeständigkeit auf.

Die mittlere Lage 62 dient wegen ihrer hohen mechanischen Festigkeit als aerodynamisch tragende Lage des Strahlruders 60. Aufgrund ihrer Erstreckung quer durch das gesamte Bauteil von der Anströmkante 48 bis zur Abströmkante 50 kann sie die Stabilität des Strahlruders 60 in starkem Ausmaß erhöhen.

Das Strahlruder 60 kann als Ganzes, das heißt einschließlich des Schaftes 44, aus faserkeramischem Material gefertigt sein. In diesem Fall erstrecken sich die Bereiche an faserkeramischem Material in der in Figur 3 gezeigten Anordnung über die gesamte Ausdehnung sowohl des Flügels 42 als auch des Schaftes 44.

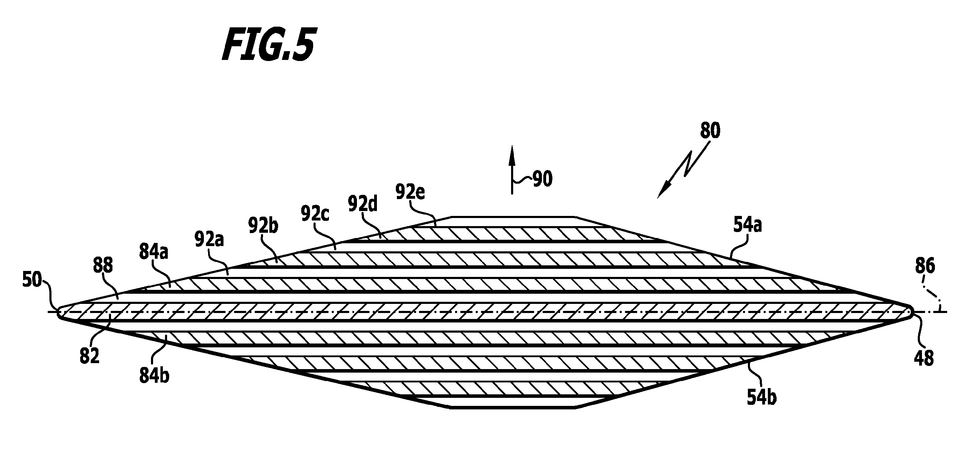

In Figur 5 ist eine Querschnittsansicht eines zweiten Ausführungsbeispiels eines erfindungsgemäßen Strahlruders 80, welches die in Figur 2 gezeigte Form aufweist, entlang der Linie A-A in Figur 2 wiedergegeben. Bereits in Figur 2 gezeigte Elemente sind in Figur 5 mit denselben Bezugszeichen bezeichnet wie in Figur 2.

Bei diesem zweiten Ausführungsbeispiel ist eine mittlere Lage 82 in gleicher Weise angeordnet wie bei dem in Figuren 3 und 4 gezeigten ersten Ausführungsbeispiel. Die Anströmkante 48 und die Abströmkante 50 sind jeweils über ihre gesamte Längserstreckung und ihre gesamte Quererstreckung an der mittleren Lage 82 ausgebildet. Auch an die Anströmkante 48 und die Abströmkante 50 jeweils angrenzende kantennahe Abschnitte jeweils beider Strömungsführungsflächen 54a, 54b des Strahlruders 60 sind an der mittleren Lage 82 ausgebildet. Hieraus ergeben sich die bereits im Zusammenhang mit dem ersten Ausführungsbeispiel beschriebenen Vorteile.

Auf den beiden Seiten der mittleren Lage 82 ist bei diesem zweiten Ausführungsbeispiel allerdings eine Mehrzahl von weiteren Lagen an faserkeramischem Material vorgesehen. Insbesondere sind auch der erste Bereich 84a und der zweite Bereich 84b, deren faserkeramisches Material jeweils einen höheren Keramikgehalt aufweist als das der mittleren Lage 82, jeweils als Lage ausgebildet. Sämtliche Lagen des Strahlruders 80 verlaufen eben.

Das Strahlruder 80 weist eine Mittelebene auf, in der eine gemeinsame Winkelhalbierende 86 der Kantenwinkel der Anströmkante 48 und der Abströmkante 50 verläuft und die parallel zu der Längserstreckung 52 der Anströmkante 48 und der Längserstreckung der Abströmkante 50 verläuft. Der Aufbau des Strahlruders 80 aus Bereichen faserkeramischen Materials ist spiegelsymmetrisch bezüglich dieser Mittelebene. Im Folgenden wird der Lagenaufbau des Strahlruders 80 auf der Seite der mittleren Lage 82, auf der die Lage des ersten Bereichs 84a angeordnet ist, näher beschrieben. Aufgrund der Spiegelsymmetrie des Strahlruders 80 gilt Entsprechendes auf der Seite der mittleren Lage 82, auf der die Lage des zweiten Bereichs 84b angeordnet ist.

Die mittlere Lage 82 und die Lage des ersten Bereichs 84a grenzen jeweils direkt an eine zwischen ihnen angeordnete Zwischenlage 88 an faserkeramischem Material an, wobei ein Keramikgehalt des faserkeramischen Materials der Zwischenlage 88 zwischen dem Keramikgehalt des faserkeramischen Materials der mittleren Lage 82 und dem Keramikgehalt des faserkeramischen Materials der Lage des ersten Bereiches 84a liegt. Von der mittleren Lage 82 zur Lage des ersten Bereichs 84a verläuft der Keramikgehalt damit gradiert, wodurch ein starker Zusammenhalt zwischen den Lagen erzielt wird.

In einer Stapelrichtung 90 der Lagen des faserkeramischen Materials folgen auf die Lage des ersten Bereichs 84a auf einer von der mittleren Lage 82 weg weisenden Seite äußere Lagen 92 an faserkeramischem Material, deren jeweiliges faserkeramisches Material so gewählt ist, dass in der Stapelrichtung 90 alternierend Lagen (84a; 92b; 92d) jeweils eines faserkeramischen Materials mit einem relativ hohen Keramikgehalt und Lagen (88; 92a; 92c; 92e) jeweils eines faserkeramischen Materials mit einem relativ niedrigen Keramikgehalt angeordnet sind. In Figur 5 sind beispielhaft fünf äußere Lagen 92a, 92b, 92c, 92d, 92e gezeigt.

Durch die alternierende Anordnung von Material mit relativ hohem und Material mit relativ niedrigem Keramikgehalt in der Stapelrichtung 90 wird eine erhöhte Stabilität des Strahlruders 80 gegenüber den in der Heißgasströmung 24 auftretenden Belastungen erhalten. Vorteilhafterweise ist eine hohe Anzahl von äußeren Lagen 92 vorhanden. Dies wird bei einer gegebenen Erstreckung des Strahlruders 80 in der Stapelrichtung 90 durch die Wahl einer geringen Dicke der einzelnen Lagen an faserkeramischem Material ermöglicht.

Die von der mittleren Lage 82 am weitesten beabstandete äußere Lage 92e bildet eine Decklage des Bauteils.

Bei einer bevorzugten Materialkombination bestehen die mittlere Lage 82 aus einem C/C-SiC-XB-Material, die Lage des ersten Bereichs 84a und die äußeren Lagen 92b, 92d mit relativ hohem Keramikgehalt ihres Materials aus einem C/C-SiC-XD-Material und die Zwischenlage 88 und die Außenlagen 92a, 92c, 92e mit relativ niedrigem Keramikgehalt ihres Materials aus einem C/C-SiC-XT- oder C/C-SiC-XC-Material.

Das Strahlruder 60 kann als Ganzes einschließlich des Schaftes 44 aus faserkeramischem Material gefertigt sein. Dann erstrecken sich die Lagen an faserkeramischem Material in der in Figur 5 gezeigten Anordnung über die gesamte Ausdehnung sowohl des Flügels 42 als auch des Schaftes 44.

Durch die Kombination von faserkeramischen Materialien unterschiedlichen Keramikgehalts wird das erfindungsgemäße Bauteil, bei dem es sich insbesondere um ein Strahlruder handeln kann, hinsichtlich seiner Beständigkeit gegenüber den in einer Heißgasströmung auftretenden aerodynamischen und abrasiven Belastungen optimiert. Dadurch, dass mindestens eine spitzwinklige Anströmkante und/oder Abströmkante an der mittleren Lage vorgesehen ist, wird insbesondere das Risiko eines Ausbrechens an dieser mindestens einen Anströmkante und/oder Abströmkante verringert. Dies führt zu einer höheren Lebensdauer des Bauteils.

## Patentansprüche

1. Bauteil zum Einsatz in Heißgasströmungen, welches einen ersten Bereich (64a; 84a) an faserkeramischem Material, einen zweiten Bereich (64b; 84b) an faserkeramischem Material und eine zwischen dem ersten Bereich (64a; 84a) und dem zweiten Bereich (64b; 84b) angeordnete mittlere Lage (62; 82) an faserkeramischem Material umfasst, wobei mindestens eine spitzwinklige Anströmkante (48) und/oder Abströmkante (50) des Bauteils an der mittleren Lage (62; 82) ausgebildet ist, **dadurch gekennzeichnet, dass** das faserkeramische Material der mittleren Lage (62; 82) einen niedrigeren Keramikgehalt aufweist als das faserkeramische Material des ersten Bereichs (64a; 84a) und des zweiten Bereichs (64b; 84b).

2. Bauteil nach Anspruch 1, **dadurch gekennzeichnet, dass** die mindestens eine Anströmkante (48) und/oder Abströmkante (50) zumindest über einen Teil einer endlichen Längserstreckung (52) an der mittleren Lage (62; 82) ausgebildet ist, und insbesondere, dass die mindestens eine Anströmkante (48) und/oder Abströmkante (50) über ihre gesamte Längserstreckung (52) an der mittleren Lage (62; 82) ausgebildet ist.

3. Bauteil nach einem der voranstehenden Ansprüche, **dadurch gekennzeichnet, dass** die mindestens eine Anströmkante (48) und/oder Abströmkante (50) eine endliche Quererstreckung (66) quer zu ihrer Längserstreckung (52) aufweist, und insbesondere, dass die mindestens eine Anströmkante (48) und/oder Abströmkante (50) zumindest über einen Teil ihrer Quererstreckung (66) an der mittleren Lage (62; 82) ausgebildet ist, und insbesondere, dass die mindestens eine Anströmkante (48) und/oder Abströmkante (50) über ihre gesamte Quererstreckung (66) an der mittleren Lage (62; 82) ausgebildet ist, und insbesondere, dass sowohl die mindestens eine Anströmkante (48) und/oder Abströmkante (50) über ihre gesamte Quererstreckung (66) als auch mindestens ein an die mindestens eine Anströmkante (48) und/oder Abströmkante (50) angrenzender kantennaher Abschnitt (74a; 74b) einer Strömungsführungsfläche (54a; 54b) des Bauteils an der mittleren Lage (62; 82) ausgebildet sind.

4. Bauteil nach einem der voranstehenden Ansprüche, **dadurch gekennzeichnet, dass** eine Verlaufsrichtung (65) der mittleren Lage (62; 82) zu der Längserstreckung (52) der mindestens einen Anströmkante (48) und/oder Abströmkante (50) parallel ist.

5. Bauteil nach einem der voranstehenden Ansprüche, **dadurch gekennzeichnet, dass** eine Winkelhalbierende (76; 86) eines Kantenwinkels (68) mindestens einer Anströmkante (48) und/oder Abströmkante (50) innerhalb des Bauteils in der mittleren Lage (62; 82) liegt.

6. Bauteil nach einem der voranstehenden Ansprüche, **dadurch gekennzeichnet, dass** eine Winkelhalbierende (76; 86) eines Kantenwinkels (68) mindestens einer Anströmkante (48) und/oder Abströmkante (50) in einer parallel zu der Längserstreckung (52) dieser mindestens einen Anströmkante (48) und/oder Abströmkante (50) verlaufenden Mittelebene des Bauteils verläuft, und insbesondere, dass ein Aufbau des Bauteils aus Bereichen faserkeramischen Materials spiegelsymmetrisch bezüglich der Mittelebene ist.

7. Bauteil nach einem der voranstehenden Ansprüche, **dadurch gekennzeichnet, dass** der erste Bereich (64a; 84a) und/oder der zweite Bereich (64b; 84b) als Lagen faserkeramischen Materials ausgebildet sind.

8. Bauteil nach einem der voranstehenden Ansprüche, **dadurch gekennzeichnet, dass** das Bauteil mindestens eine Zwischenlage (88) an faserkeramischem Material aufweist, an welche auf einer ersten und einer zweiten Seite jeweils direkt eine Lage (82; 84a) an faserkeramischem Material angrenzt, wobei ein Keramikgehalt des faserkeramischen Materials der Zwischenlage zwischen einem Keramikgehalt der auf der ersten Seite angrenzenden Lage (82) und einem Keramikgehalt der auf der zweiten Seite angrenzenden Lage (84a) liegt.

9. Bauteil nach einem der voranstehenden Ansprüche, **dadurch gekennzeichnet, dass** das Bauteil einen Lagenaufbau aus Lagen an faserkeramischem Material aufweist, in welchem in einer Stapelrichtung (90) der Lagen alternierend Lagen (84a; 92b; 92d) jeweils eines faserkeramischen Materials mit einem relativ hohen Keramikgehalt und Lagen (82; 92a; 92c; 92e) jeweils eines faserkeramischen Materials mit einem relativ niedrigen Keramikgehalt angeordnet sind.

10. Bauteil nach einem der voranstehenden Ansprüche, **dadurch gekennzeichnet, dass** das Bauteil eine Decklage (92e) an faserkeramischem Material aufweist, wobei das faserkeramische Material der Decklage (92e) einen höheren Keramikgehalt aufweist als das faserkeramische Material der mittleren Lage (82).

11. Bauteil nach einem der voranstehenden Ansprüche, **dadurch gekennzeichnet, dass** das faserkeramische Material mindestens eines Bereichs ein Carbidkeramikmaterial ist oder umfasst.

12. Bauteil nach einem der voranstehenden Ansprüche, **dadurch gekennzeichnet, dass** das faserkeramische Material mindestes eines Bereichs C-Fasern oder SiC-Fasern enthält, und insbesondere, dass das faserkeramische Material des mindestens einen Bereichs ein C/C-SiC-Material oder ein SiC/SiC-Material ist oder umfasst, und insbesondere, dass die mittlere Lage aus einem C/C-SiC-XB-Material besteht, und insbesondere, dass der erste Bereich und/oder der zweite Bereich aus einem C/C-SiC-XD-Material bestehen.

13. Bauteil nach einem der voranstehenden Ansprüche, **dadurch gekennzeichnet, dass** das faserkeramische Material mindestens eines Bereichs zumindest teilweise aus einem biomorphen Werkstoff hergestellt ist.

14. Bauteil nach einem der voranstehenden Ansprüche, **dadurch gekennzeichnet, dass** das faserkeramische Material mindestens eines Bereichs Fasern enthält, welche in Form eines Filzes, eines Vlieses, eines Wickels, eines Geleges, eines Gewebes oder eines Geflechts angeordnet sind.

15. Bauteil nach einem der voranstehenden Ansprüche, **gekennzeichnet durch** eine Ausbildung als Strahlruder (60; 80).

## Claims

1. A component for use in streams of hot gas which comprises a first region (64a; 84a) of fibre-ceramic material, a second region (64b; 84b) of fibre-ceramic material and a central layer (62; 82) of fibre-ceramic material which is arranged between the first region (64a; 84a) and the second region (64b; 84b), wherein at least one acute-angled in-flow edge (48) and/or away-flow edge (50) of the component is formed on the central layer (62; 82), **characterized in that** the fibre-ceramic material of the central layer (62; 82) has a lower ceramic content than the fibre-ceramic material of the first region (64a; 84a) and the second region (64b; 84b) .

2. A component in accordance with Claim 1, **characterized in that** the at least one in-flow edge (48) and/or away-flow edge (50) is formed on the central layer (62; 82) over at least a part of its finite longitudinal extent (52), and in particular **in that** the at least one in-flow edge (48) and/or away-flow edge (50) is formed on the central layer (62; 82) over its entire longitudinal extent (52).

3. A component in accordance with any of the preceding Claims, **characterized in that** the at least one in-flow edge (48) and/or away-flow edge (50) has a finite transverse extent (66) transverse to its longitudinal extent (52), and in particular **in that** the at least one in-flow edge (48) and/or away-flow edge (50) is formed on the central layer (62; 82) over at least a part of its transverse extent (66), and in particular **in that** the at least one in-flow edge (48) and/or away-flow edge (50) is formed on the central layer (62; 82) over its entire transverse extent (66), and in particular **in that** the at least one in-flow edge (48) and/or away-flow edge (50) is formed on the central layer (62; 82) over its entire transverse extent (66) and also **in that** at least one near-edge section (74a; 74b) of a flow guidance surface (54a; 54b) of the component bordering on the at least one in-flow edge (48) and/or away-flow edge (50) is formed on the central layer (62; 82).

4. A component in accordance with any of the preceding Claims, **characterized in that** the running direction (65) of the central layer (62; 82) is parallel to the longitudinal extent (52) of the at least one in-flow edge (48) and/or away-flow edge (50).

5. A component in accordance with any of the preceding Claims, **characterized in that** the bisector (76; 86) of an edge angle (68) of at least one in-flow edge (48) and/or away-flow edge (50) lies within the component in the central layer (62; 82).

6. A component in accordance with any of the preceding Claims, **characterized in that** the bisector (76; 86) of an edge angle (68) of at least one in-flow edge (48) and/or away-flow edge (50) runs in a centre plane of the component which extends in parallel with the longitudinal extent (52) of said at least one in-flow edge (48) and/or away-flow edge (50), and in particular **in that** the construction of the component consisting of regions of fibre-ceramic material is mirror-symmetrical with respect to the centre plane.

7. A component in accordance with any of the preceding Claims, **characterized in that** the first region (64a; 84a) and/or the second region (64b; 84b) are formed as layers of fibre-ceramic material.

8. A component in accordance with any of the preceding Claims, **characterized in that** the component comprises at least one intermediate layer (88) of fibre-ceramic material which is directly bounded on a first and a second side by a respective layer (82; 84a) of fibre-ceramic material, wherein the ceramic content of the fibre-ceramic material of the intermediate layer lies between the ceramic content of the layer (82) bordering on the first side and the ceramic content of the layer (84a) bordering on the second side.

9. A component in accordance with any of the preceding Claims, **characterized in that** the component has a layered structure consisting of layers of fibre-ceramic material in which, in a direction (90) of superposition of the layers, there are arranged, in an alternating manner, layers (84a; 92b; 92d) in each case (90) of a fibre-ceramic material having a relatively high ceramic content and layers (82; 92a; 92c; 92e) in each case of a fibre-ceramic material having a relatively low ceramic content.

10. A component in accordance with any of the preceding Claims, **characterized in that** the component has a covering layer (92e) of fibre-ceramic material, wherein the fibre-ceramic material of the covering layer (92e) has a higher ceramic content than the fibre-ceramic material of the central layer (82).

11. A component in accordance with any of the preceding Claims, **characterized in that** the fibre-ceramic material in at least one region is or comprises a carbide ceramic material.

12. A component in accordance with any of the preceding Claims, **characterized in that** the fibre-ceramic material in at least one region contains C fibres or SiC fibres, and in particular **in that** the fibre-ceramic material in at least one region is or comprises a C/C-SiC material or a SiC/SiC material, and in particular **in that** the central layer consists of a C/C-SiC-XB material, and in particular **in that** the first region and/or the second region consists of a C/C-SiC-XD material.

13. A component in accordance with any of the preceding Claims, **characterized in that** the fibre-ceramic material in at least one region is made at least partially of a biomorphic material.

14. A component in accordance with any of the preceding Claims, **characterized in that** the fibre-ceramic material in at least one region contains fibres which are arranged in the form of a felt, a fleece, a lap roll, a scrim, a woven fabric or a braiding.

15. A component in accordance with any of the preceding Claims, **characterized in that** it is in the form of a jet vane (60; 80) .

## Revendications

1. Composant utilisable dans des écoulements de gaz chaud qui comprend une première zone (64a ; 84a) de matériau de fibres céramiques, une deuxième zone (64a, 84b) de matériau de fibres céramiques et une couche médiane (62 ; 82) de matériau de fibres céramiques, disposée entre la première zone (64a ; 84a) et la deuxième zone (64b ; 84b), dans lequel au moins un bord d'attaque à angle aigu (48) et/ou un bord de fuite (50) du composant est formé sur la couche médiane (62 ; 82), **caractérisé en ce que** le matériau de fibres céramiques de la couche médiane (62 ; 82) présente une teneur en céramique inférieure à celle du matériau de fibres céramiques de la première zone (64a ; 84a) et de la deuxième zone (64b ; 84b).

2. Composant selon la revendication 1, **caractérisé en ce que** l'au moins un bord d'attaque (48) et/ou bord de fuite (50) est formé au moins sur une partie d'une étendue longitudinale terminale (52) sur la couche médiane (62 ; 82) et en particulier, **en ce que** l'au moins un bord d'attaque (48) et/ou bord de fuite (50) est formé sur toute son étendue longitudinale (52) sur la couche médiane (62 ; 82).

3. Composant selon l'une des revendications précédentes, **caractérisé en ce que** l'au moins un bord d'attaque (48) et/ou bord de fuite (50) présente une étendue transversale (66) terminale qui est transversale à son étendue longitudinale (52) et en particulier **en ce que** l'au moins un bord d'attaque (48) et/ou bord de fuite (50) est formé au moins sur une partie de son étendue transversale (66) sur la couche médiane (62 ; 82), et en particulier **en ce que** l'au moins un bord d'attaque (48) et/ou bord de fuite sur toute son étendue transversale (66) est formé sur la couche médiane (62 ; 82) et en particulier **en ce que**, à la fois l'au moins un bord d'attaque (48) et/ou bord de fuite (50) sont formés sur toute leur étendue transversale (66) et également au moins un segment (74a ; 74b) proche du bord, jouxtant l'au moins un bord d'attaque (48) et/ou bord de fuite (50) d'une surface de conduction de l'écoulement (54a ; 54b) du composant est formé sur la couche médiane (62 ; 82).

4. Composant selon l'une des revendications précédentes, **caractérisé en ce qu'**une direction d'évolution (65) de la couche médiane (62 ; 82) vers l'étendue longitudinale (52) de l'au moins un bord d'attaque (48) et/ou bord de fuite (50) est parallèle.

5. Composant selon l'une des revendications précédentes, **caractérisé en ce qu'**une bissectrice (76 ; 86) d'un angle de bord (68) d'au moins un bord d'attaque (48) et/ou un bord de fuite (50) se situe à l'intérieur du composant dans la couche médiane (62 ; 82).

6. Composant selon l'une des revendications précédentes, **caractérisé en ce qu'**une bissectrice (76 ; 86) d'un angle de bord (68) d'au moins un bord d'attaque (48) et/ou bord de fuite (50) évolue dans un plan médian du composant, parallèlement à l'étendue longitudinale (52) de ce au moins un bord d'attaque (48) et/ou bord de fuite (50), et en particulier **en ce qu'**une construction du composant des zones de matériau de fibre céramique est symétrique en miroir par rapport au plan médian.

7. Composant selon l'une des revendications précédentes, **caractérisé en ce que** la première zone (64a ; 84a) et/ou la deuxième zone (64b ; 84b) sont formées comme des couches de matériau de fibres céramiques.

8. Composant selon l'une des revendications précédentes, **caractérisé en ce que** le composant présente au moins une couche intermédiaire (88) de matériau à fibres céramiques, que jouxte directement sur un premier et un deuxième côté respectivement, une couche (82 ; 84a) de matériau de fibres céramiques, dans lequel une teneur en céramique du matériau à fibres céramiques de la couche intermédiaire se situe entre une teneur en céramique de la couche (82) jouxtant le premier côté et une teneur en céramique de la couche (84a) jouxtant le deuxième côté.

9. Composant selon l'une des revendications précédentes, **caractérisé en ce que** le composant présente une structure de couche constituée de couches de matériau à fibres céramiques, dans laquelle sont disposées dans un sens d'empilement (90) des couches, des couches alternantes (84a ; 92b ; 92d) respectivement d'un matériau de fibres céramique présentant une teneur en céramique relativement élevée et des couches (82 ; 92a : 92c ; 92e) respectivement d'un matériau de fibres céramiques présentant une teneur en céramique relativement faible.

10. Composant selon l'une des revendications précédentes, **caractérisé en ce que** le composant présente une couche de couverture (92e) de matériau de fibres céramiques, dans lequel le matériau de fibres céramiques de la couche de couverture (92e) présente une teneur en céramique supérieure à celle du matériau de fibres céramiques de la couche médiane (82).

11. Composant selon l'une des revendications précédentes, **caractérisé en ce que** le matériau de fibres céramiques est ou comprend au moins une zone de matériau de céramique au carbure.

12. Composant selon l'une des revendications précédentes, **caractérisé en ce que** le matériau de fibres céramiques contient au moins une zone de fibres de C ou de fibres de SiC et en particulier **en ce que** le matériau de fibres céramiques de l'au moins une zone est ou présente un matériau de C/C-SiC ou un matériau de SiC/SiC et en particulier **en ce que** la couche médiane est constituée d'un matériau de C/C-SiC-XB et en particulier **en ce que** la première zone et/ou la deuxième zone sont constituées d'un matériau de C/C-SiC-XD.

13. Composant selon l'une des revendications précédentes, **caractérisé en ce que** le matériau de fibres céramiques d'au moins une zone est au moins en partie fabriqué en une matière biomorphe.

14. Composant selon l'une des revendications précédentes, **caractérisé en ce que** le matériau de fibres céramiques d'au moins une zone contient des fibres qui sont disposées sous la forme d'un feutre, d'une nappe, d'un ruban, d'une natte, d'un tissu ou d'un treillis.

15. Composant selon l'une des revendications précédentes, **caractérisé par** une formation en système de déviation de courant (60 ; 80).
